# EUROPÄISCHE PATENTSCHRIFT

(11) **EP 2 715 880 B1**
(45) Veröffentlichungstag und Bekanntmachung des Hinweises auf die Patenterteilung: **04.03.2015**
(21) Anmeldenummer: 12730371.7
(22) Anmeldetag: 22.05.2012
(51) Int. Cl.: H01R 13/66, H01R 43/18, H02H 9/04

(54) **Verfahren zur Herstellung eines Steckverbinders**
Method for the production of a plug connector
Procédé de fabrication d'un connecteur

(30) Priorität: 23.05.2011 DE 102011050567
(43) Veröffentlichungstag der Anmeldung: 09.04.2014
(73) Patentinhaber: Stimpfl, Kurt, 93195 Wolfsegg (DE)
(72) Erfinder: Stimpfl, Kurt, 93195 Wolfsegg (DE)
(74) Vertreter: Gustorf, Gerhard
(86) Internationale Anmeldenummer: PCT/DE2012/100153
(87) Internationale Veröffentlichungsnummer: WO 2012/159626

(56) Entgegenhaltungen:
- EP-A2- 0 644 612
- DE-C1- 19 945 426
- GB-A- 1 223 139
- US-A- 5 099 380
- US-A- 5 181 864
- US-A- 5 183 698
- US-A1- 2006 232 370
- US-B1- 6 172 590

## Beschreibung

Die vorliegende Erfindung betrifft ein Verfahren zum Herstellen eines Steckverbinders zum Schutz eines elektrischen Systems gegen Überspannungsentladung nach dem Oberbegriff des Patentanspruchs 1.

### Stand der Technik

Elektrische Systeme, insbesondere übliche Elektroniken, elektronische Geräte, Halbleiterelemente, Kabelbäume und Steuergeräte für Kraftfahrzeuge können durch Überspannungsentladung beschädigt oder sogar vollständig zerstört werden. Überspannungen können während der Herstellung oder Fertigung, Lagerung, Verpackung, Verarbeitung oder bei einem Anschließen durch elektrostatische Aufladung entstehen. Durch Entladung kann die Beschädigung oder Zerstörung erfolgen. Die elektrostatische Aufladung kann durch Reibung während eines Hantierens beim Verpacken oder der Herstellung, durch Übertragung von Ladungen (Induktion) von Maschinen, Vorrichtungen und Personen auf die elektrischen Systeme entstehen.

Um eine Beschädigung von solchen empfindlichen elektrischen Systemen durch elektrostatische Entladungen zu verhindern, sind häufig für jeden Kontaktstift eines Steckverbinders verhältnismäßig teure und Einbauraum beanspruchende Bauteile wie Kondensatoren, Spulen oder Varistoren, insbesondere auf einer Platine einer Elektronik, vorgesehen.

Aus DE 43 26 486 A1 ist ein Filter-Stecker mit einem Leistenkörper bekannt, der zum Unterdrücken von hochfrequenten Störungen aus einem Gemisch von Isolierstoffmaterial und Ferritpulver hergestellt wird.

Aus "Elektrisch leitende Kunststoffe", Carl Hanser Verlag München Wien, herausgegeben von H. J. Mair und S. Roth, Seite 10, ist die Anwendung elektrisch leitfähiger Kunststoffe zur Vermeidung elektrostatischer Aufladung von Gehäusen bekannt. Ein solches Gehäuse besteht aus einem Kunststoff-Russ-Gemisch und soll einen Oberflächenwiderstand von weniger als 10⁹ Ohm aufweisen.

Die europäische Patentanmeldung EP 0 649 150 A1 betrifft einen Verbundwerkstoff, der einen Füllstoff und eine den Füllstoff einbettende Matrix aufweist. Der Füllstoff enthält überwiegend eine Komponente mit Teilchen von Kern-Schale-Struktur. Die Schalen der Teilchen der Kern-Schale-Struktur sind aus Isoliermaterial, wohingegen die Kerne dieser Teilchen aus elektrisch leitendem oder elektrisch halbleitendem Material bestehen. Unter bestimmten Voraussetzungen kann sich bei geeigneter Auswahl des Materials der Kerne bei der Einwirkung eines elektrischen Feldes die elektrische Leitfähigkeit dieses Verbundstoffes zweimal nicht linear ändern. Die erste nicht lineare Änderung bewirkt eine Spannungsbegrenzung, die zweite eine Strombegrenzung.

DE 37 02 780 A1 beschreibt einen Träger für ein Halbleiterbauelement, in den eine Varistor-Schutzvorrichtung gegen die Wirkungen von elektromagnetischen Feldern oder statischen Ladungen integriert ist. Die Anschlüsse des zu schützenden Halbleiterbauelements sind miteinander durch eine Sandwich-Struktur verbunden. Diese weist eine erste Schicht aus einem Varistormaterial, eine erste mit einem gegebenen Potential verbundene Elektrode, eine zweite Schicht aus Varistormaterial sowie eine zweite mit Masse verbundene Elektrode auf.

Aus US 5 616 881 ist ein Sockel für eine Zündpille eines Airbags bekannt, die zwei Kammern aufweist. In der ersten Kammer ist ein Einsatz mit zwei Steckstiften und einem Metalloxid-Varistor zum Schutz eines Zünders vor elektrostatischer Entladung angeordnet.

Die DE 199 45 426 C1, von der die Erfindung ausgeht, beschreibt einen Steckverbinder eines elektrischen Geräts mit Kontaktstiften, die in einem Kunststoffkörper eingebettet sind, der ein Material aufweist, das bei Spannungen in einem Bereich oberhalb einer Arbeitsspannung leitende Eigenschaften aufweist und bei Spannungen im Bereich der Arbeitsspannung elektrisch isolierende Eigenschaften hat. Als geeignetes Material mit guter Leitfähigkeit bei Erreichen einer Durchbruchspannung wird eine Polymermischung auf Polypropylenbasis mit Kohlenstoffpulver offenbart, vorzugsweise ein Varistormaterial. Dieser Stecker soll fertigungstechnisch einfach herstellbar sein und keinen Einbauraum beanspruchenden Schutz vor elektrostatischer Entladung aufweisen.

Nachteilig ist jedoch der notwendige Einsatz eines technologisch aufwändigen Materials, das aus einer Mischung eines Kunststoffs mit Kohlenstoffpulver besteht.

Es ist daher Aufgabe der vorliegenden Erfindung, die Nachteile aus dem Stand der Technik zu beseitigen und ein vereinfachtes Verfahren zum Herstellen eines Steckverbinders zum Schutz eines elektrischen Systems gegen Überspannungsentladung anzugeben, bei dem die elektronischen Eigenschaften des Kunststoffes auf eine für den Schutz vor Überspannungen besonders geeignete Art geändert werden.

### Offenbarung der Erfindung

Diese Aufgabe wird gelöst durch ein Verfahren zur Herstellung eines Steckverbinders mit den Merkmalen des Patentanspruchs 1. Der Steckverbinder selbst umfasst Kontaktstifte, die in einen Kunststoffkörper eingebettet werden. Der Kunststoff weist einen Bereich zwischen den Kontaktstiften auf, der
(a) in einem Arbeitsbereich bis zu einer Grenzspannung einen elektrischen Widerstand mit im Wesentlichen elektrisch isolierender Eigenschaft aufweist und
(b) oberhalb der Grenzspannung einen verringerten elektrischen Widerstand aufweist, durch den sich Überspannungen zwischen den Kontaktstiften entladen können.

Bei der Herstellung wird kein Varistormaterial eingesetzt, wobei der Kunststoff auf Polypropylenbasis mit 30% auf die Masse bezogen mit Glasfasern verstärkt ist. Zwischen zwei Kontaktstiften mit einer zeitveränderlichen Stromspannungsquelle wird über einen Vorwiderstand ein elektrischer Strom an den Bereich zwischen den Kontaktstiften angelegt, so dass sich eine Verringerung des elektrischen Widerstands in diesem Bereich einstellt.

Im Gegensatz zum Stand der Technik kann der Steckverbinder auf einfache Weise aus einem handelsüblichen Steckverbinder hergestellt werden, der Kontaktstifte umfasst, die in einem Kunststoffkörper eingebettet sind, der im Wesentlichen einen elektrischen Isolator darstellt, dessen elektrischer Widerstand üblicherweise mindestens 2 GΩ, vorzugsweise mindestens 30 GΩ, besonders bevorzugt mindestens 200 GΩ beträgt. Es muss also kein Varistormaterial wie im Stand der Technik, beispielsweise eine Mischung aus Kunststoff und Kohlenstoffpulver, eingesetzt werden.

Der Steckverbinder weist mindestens zwei Kontaktstifte oder Pins auf, kann aber auch deutlich mehr bis zu 200 umfassen.

Der Vorteil des Steckverbinders besteht darin, dass er in einem Arbeitsbereich bis zu einer Grenzspannung einen elektrischen Widerstand mit im Wesentlichen elektrisch isolierender Eigenschaft aufweist und somit ein elektrisches System mit verbesserter Zuverlässigkeit vor einer Überspannungsentladung schützt. Der elektrische Widerstand kann in diesem Bereich beispielsweise mindestens 2 GΩ, vorzugsweise mindestens 30 GΩ, besonders bevorzugt mindestens 200 GΩ betragen.

Oberhalb der Grenzspannung weist der Kunststoff des Steckverbinders einen Bereich zwischen mindestens zwei Kontaktstiften auf, der einen verringerten elektrischen Widerstand besitzt und durch den sich Überspannungen zwischen den Kontaktstiften entladen können. Dieser Bereich kann oberhalb der Grenzspannung einen verringerten elektrischen Widerstand von weniger als 20 GΩ, vorzugsweise weniger als 200 kΩ, besonders bevorzugt weniger als 60 kΩ aufweisen. Der Kunststoff des erfindungsgemäß hergestellten Steckverbinders kann ein Duroplast oder Thermoplast sein, der glasfaserverstärkt ist. Bei zum Verständnis der Erfindung genannten Beispielen umfasst der Kunststoff des Steckverbinders Polyethylen oder Polypropylen. Besonders bevorzugt ist er mit bis zu 50%, besonders bevorzugt bis zu 30%, bezogen auf die Masse, mit Glasfasern verstärkt.

Der im Anspruch 1 der Erfindung beschriebene Bereich kann eine Schichtdicke von 0,05 bis 0,2 mm, vorzugsweise 0,1 mm, aufweisen. Die Dicke kann durch die bei dem erfindungsgemäßen Herstellungsverfahren zugeführte Energiemenge gesteuert werden, d.h. über Spannung, Stromstärke und Dauer der Strombeaufschlagung.

Das erfindungsgemäße Verfahren gemäß Anspruch 1 zur Herstellung eines Steckverbinders umfasst somit im Einzelnen folgende Schritte: An einen Steckverbinder mit Kontaktstiften, die in einem Kunststoffkörper eingebettet sind, wobei der Kunststoff eine im Wesentlichen elektrisch isolierende Eigenschaft aufweist, wird zwischen zwei Kontaktstiften mit einer zeitveränderlichen Stromspannungsquelle, zum Beispiel einem Funktionsgenerator oder Arbitrary Generator, über ein strombegrenzendes Element, z.B. einen ohmschen Widerstand oder Kondensator, ein elektrischer Strom an den Bereich zwischen den Kontaktstiften angelegt, so dass sich eine Verringerung des elektrischen Widerstands in diesem Bereich einstellt. Dadurch wird in den Kunststoffkörper zwischen den zwei Kontaktstiften ein Stromfluss eingeprägt.

Als Spannungsquelle kann eine Gleichstromquelle, eine Wechselstromquelle oder eine zeitveränderliche Stromquelle, z.B. ein Arbitrary Waveform Generator, eingesetzt werden. Beim Einsatz einer Gleichstromquelle muss die Stromzufuhr immer wieder unterbrochen werden. Eine Wechselstomquelle ist daher bevorzugt, weil beim Nulldurchgang des Spannungsverlaufs der Stromfluss gestoppt wird.

Bei einer bevorzugten Ausführungsform wird Wechselstrom eingesetzt mit einer Spannung von 1 bis 10 kV, vorzugsweise 5 bis 6 kV, einer Stromstärke von 5 bis 50 mA, vorzugsweise 10 bis 20 mA und einer Frequenz von 50 Hz bis 200 kHz, vorzugsweise 1 kHz bis 5 kHz, besonders bevorzugt 100 Hz bis 150 Hz.

Ein weiterer Vorteil des erfindungsgemäß hergestellten Steckverbinders besteht darin, dass eine elektrostatische Entladung direkt an gefährdeten Bauteilen auch unter ungünstigsten räumlichen Verhältnissen verhindert werden kann, da kein zusätzlicher Platzbedarf für Bauteile entsteht. Es fallen keine zusätzlichen Kosten für Bauteile, Bestückung, Platinenfläche, Layout oder sonstige konstruktive Aufwendungen an.

Der erfindungsgemäß hergestellten Steckverbinder eignet sich zum Schutz von elektrischen Systemen, insbesondere elektronischen Geräten, Halbleiterelementen und Kabelbäumen vor Überspannungsentladungen.

Der Steckverbinder eignet sich auch für elektrische Zündpillen, die einen Airbag oder einen Gurtstraffer in einem Kraftfahrzeug auslösen.

Besonders bevorzugte Ausführungsformen der Erfindung werden nun an Hand von Beispielen beschrieben.

### Beispiel 1

An einen Steckverbinder mit 100 Kontaktstiften, die in einem Kunststoffkörper eingebettet sind, wobei der Kunststoff auf Polypropylenbasis mit 30% bezogen auf die Masse mit Glasfasern verstärkt ist und einen elektrischen Widerstand von 200 GΩ aufweist, wird zwischen zwei Kontaktstiften mit einer zeitveränderlichen Stromspannungsquelle über einen Vorwiderstand mit 600 kΩ ein sinusförmiger elektrischer Wechselstrom mit 5kV Spannung, einer Frequenz von 100 kHz und einer Stromstärke von 10 mA an den Bereich zwischen den Kontaktstiften angelegt, so dass sich eine Verringerung des elektrischen Widerstands in diesem Bereich auf 28 MΩ bei etwa 30 V einstellt und ein erfindungsgemäß hergestellter Steckverbinder erhalten wird. Bei einer Spannung oberhalb von 30 V verringert sich der Widerstand auf etwa 27,5 kΩ (Zenereffekt).

### Beispiel 2

Wie in Beispiel 1 wird ein Steckverbinder hergestellt, wobei im Unterschied zum ersten Beispiel eine Spannung von 6 kV angelegt wird. Der zwischen den Kontaktstiften erzeugte Bereich weist eine Schichtdicke von 0,1 mm auf. Der verringerte elektrische Widerstand in dem Bereich beträgt 28 kΩ**.**

## Patentansprüche

1. Verfahren zum Herstellen eines Steckverbinders für einen Schutz eines elektrischen Systems gegen Überspannungsentladung, wobei der Steckverbinder Kontaktstifte umfasst, die in einem Kunststoffkörper eingebettet sind und der Kunststoff einen Bereich zwischen den Kontaktstiften aufweist, der
(a) in einem Arbeitsbereich bis zu einer Grenzspannung einen elektrischen Widerstand mit im Wesentlichen elektrisch isolierender Eigenschaft aufweist und
(b) oberhalb der Grenzspannung einen verringerten elektrischen Widerstand aufweist, durch den sich Überspannungen zwischen den Kontaktstiften entladen können,
**gekennzeichnet durch** die folgenden Merkmale:
(c) bei der Herstellung wird kein Varistormaterial eingesetzt,
(d) der Kunststoff ist ein Kunststoff auf Polypropylenbasis mit 30% auf die Masse bezogen mit Glasfasern verstärkt und hat im Wesentlichen elektrisch isolierende Eigenschaften,
(e) zwischen zwei Kontaktstiften mit einer zeitveränderlichen Spannungsquelle wird über einen Vorwiderstand ein elektrischer Strom an den Bereich zwischen den Kontaktstiften angelegt, so dass sich eine Verringerung des elektrischen Widerstands in diesem Bereich einstellt.

2. Verfahren nach Anspruch 1, **dadurch gekennzeichnet, dass** der Strom mit einer Spannung von 1 bis 10 kV, vorzugsweise 5 bis 6 kV, einer Stromstärke von 5 bis 50 mA, vorzugsweise 10 bis 20 mA und einer Frequenz von 50 Hz bis 200 kHz, vorzugsweise 1 bis 5 kHz angelegt wird.

3. Verfahren nach Anspruch 1 oder 2, **dadurch gekennzeichnet, dass** der glasfaserverstärkte Kunststoff ein Duroplast oder Thermoplast ist.

## Claims

1. Method for the production of a plug connector adapted to protect an electric system against an overvoltage discharge, said plug connector comprising contact pins embedded in a body of plastic material between said contact pins, wherein said plastic material has
(a) in an operative range up to a critical voltage, an electric resistance with substantially isolating properties,
(b) in a range exceeding said critical voltage, a lower electric resistance allowing a discharge of said overvoltage between said pins,
**characterized by** the following features:
(c) for the production no varistor material is used,
(d) said plastic material is based on polypropylene with glass fibre-reinforcement of 30% referred to the mass and has sustantially isolating properties,
(e) an electric current is applied trough a dropping resistor between two contact pins of a time variable voltage source, such that the electric resistance is reduced in this area.

2. Method according to claim 1 wherein a current is applied having a voltage between 1 V and 10 kV, preferably between 5 V and 6 kV, an intensity between 5 and 50 mA, preferably between 10 and 20 mA, and a frequency between 50 Hz and 200 kHz, preferably between 1 and 5 kHz.

3. Method according to claim 1 or 2, wherin said glass fibre-reinforced plastic is a duroplastic or a thermoplastic material.

## Revendications

1. Procédé de fabrication d'un connecteur pour la protection d'un système électrique contre une décharge de surtension, le connecteur comprenant des fiches de contact encastrées dans un corps de matière plastique, la matière plastique entre lesdites fiches de contact ayant,
(a) dans une bande d'opération jusqu'à la tension limite, une résistance avec des qualités essentiellement isolantes et,
(b) dans une bande supérieure à la tension limite, une résistance réduite permettant la décharge de surtension entre les fiches de contact,
**caractérisé par** les faits suivants :
(c) pour la fabrication on n'utilise pas de matériel varistor,
(d) la matière plastique est à base de polypropylène renforcé par 30% de fibres de verre par rapport à la masse et présente des qualités essentiellement isolantes,
(e) entre deux fiches de contact d'une source de tension variable en temps on applique, à travers une résistance en série, un courant électrique de sorte qu'il y a dans cette zone une réduction de la résistance.

2. Procédé selon la revendication 1 **caractérisé par le fait qu'**on applique un courant d'une tension entre 1 à 10 kV, de préférence 5 V à 6 kV, d'une intensité entre 5 à 50 mA, de préférence entre 10 et 20 mA, et d'une fréquence de 50 Hz à 200 kHz, de préférence 1 à 5 kHz.

3. Procédé selon la revendication 1 ou 2, **caractérisé par le fait que** la matière synthétique renforcée par fibres de verre est une résine durcissable ou thermoplastique.
